# EUROPEAN PATENT SPECIFICATION

(11) **EP 0 336 570 B1**
(45) Date of publication and mention of the grant of the patent: **12.01.1994**
(21) Application number: 89302407.5
(22) Date of filing: 10.03.1989
(51) Int. Cl.: G09G 3/36, H04N 3/12

(54) **Method of driving display device**
Ansteuerverfahren für eine Anzeigevorrichtung
Méthode de contrôle d'un dispositif d'affichage

(30) Priority: 11.03.1988 JP 58765/88
(43) Date of publication of application: 11.10.1989
(73) Proprietor: MATSUSHITA ELECTRIC INDUSTRIAL CO., LTD., Kadoma-shi, Osaka-fu, 571 (JP)
(72) Inventor: Nagata, Seiichi, Sakai Osaka (JP); Takeda, Etsuya, Suita Osaka (JP); Kawamura, Tetsuya, Higashiyama-ku Kyoto (JP); Nanno, Yutaka, Amagasaki Hyogo (JP)
(74) Representative: Crawford, Andrew Birkby

(56) References cited:
- EP-A- 0 112 700
- GB-A- 2 050 668
- GB-A- 2 064 194

## Description

This invention relates to method of driving a display device for displaying pictures by driving display materials such as liquid crystals (possessing an anisotropy in dielectric constant) in alternating currents, by using an active matrix possessing switching element such as thin film transistor (TFT) and picture element electrode in a matrix form, with the aims of (1) reducing the driving electric power, (2) improving the display picture quality, and (3) enhancing the driving reliability.

The display picture quality by active matrix liquid crystal display device has been notably improved recently, and is said to be equally comparable with that of CRT. However, in the aspect of picture quality to begin with, inferiority to CRT cannot be negated as for the flicker, brightness changes in the screen vertical direction or brightness inclination, image memory phenomenon remaining as if the image of the fixed picture were printed right after display of fixed picture, gradation display performance, etc. Nothing has been reported about the technique for radical solution of the problems of adverse effects of direct-current (DC) voltage and crosstalk inevitably occurring inside the device through various parasitic capacitances inside the display device.

As the measures for improvement of flicker, the following patents are known. That is, the prior art shown to invert the polarity of the signal voltage in every field of the display screen is disclosed in the Japanese Patent Laid-Open Patent No. 60-151615, No. 61-256325, No. 61-275823, etc. The prior art shown to invert the polarity of signal voltage in every scanning line on the display screen is disclosed, among others, in the Japanese Patent Laid-Open Patent No. 60-3698, No. 60-156095 and No. 61-275822. The prior art shown to invert in every scanning line while inverting the field is disclosed in the Japanese Patent Laid-Open Patent No. 61-275824. These methods are, however, not intended to compensate for the DC voltage inevitably occurring due to parasitic capacitances in the display or dielectric anisotropy of the display materials such as liquid crystals as mentioned below, and they are designed to decrease the apparent flicker in total, not decreasing the flicker fundamentally (in every display picture element).

In a special active matrix constitution example, meanwhile, a method of decreasing crosstalk is disclosed by K. Oki et al. in Euro Display '87, p. 55 (1987). By adding a reference signal (aside from a scanning signal) to the scanning signal wiring before application of scanning signal, this method is intended to decrease the picture signal amplitude, and hence decrease the crosstalk. Other crosstalk countermeasure is proposed, for example, by W.E. Howard et al. in I.D.R.C. (International Display Research Conference) '88, p. 230 (1988). In this method, after supplying the picture signal, the portion of crosstalk voltage is compensated. In these methods, nothing particular is considered about the compensation of DC voltage due to dielectric anisotropy of the liquid crystal as stated later.

At the present, there is no patent, as far as the present inventors have investigated, directly intended to enhance the brightness inclination and gradation display performance of display pictures.

Incidentally, the following two prior arts are known as the methods for compensating for the DC voltage inevitably generated in the display device by the dielectric anisotropy of the liquid crystal, decreasing the flicker fundamentally, and enhancing the driving reliability. The first prior art is disclosed by T. Yanagisawa et al. in Japan Display '86, p. 192 (1986). In this example, the DC voltage is compensated by varying the amplitude of the picture signal voltage (Vsig) between the positive side and negative side of the amplitude center voltage (Vc). The second prior art is proposed by K. Suzuki in Euro Display '87, p. 107 (1987). This example is intended to compensate by applying a positive addition signal (Ve) after scanning signal.

Thirdly, through the parasitic capacitance between gate and drain of TFT (Cgd), the scanning signal affects the display electrode potential, and a DC potential difference occurs between the mean potential of the picture signal wiring and the mean potential of the display electrode. In the case of AC driving of liquid crystal, when the potential of the parts of the display device is set so that the mean DC potential difference between the display electrode and counter electrode may be zero, said DC potential difference appears inevitably between the picture signal wiring and counter electrode. This DC potential difference elicits serious display defects such as image memory. But any method intended to compensate so as to render this DC potential difference to zero radically has not been reported hitherto.

Fourthly, although the liquid crystal display device features, among others, small driving electric power, the power consumption in the driving circuit is very large (hundreds of mW) in the liquid crystal image display device because analog signals are handled and the number of signal output circuits is enormous. This power consumption is so great that it is not adequate for operating on a dry cell power source or the like as a portable unit. It is therefore desired to develop a driving method much lower in the power consumption.

This invention is hence intended to solve the above-discussed problems, that is, to improve the display picture quality and driving reliability, and also to reduce the driving electric power of the display device.

The present invention provides a method of driving a display device in which an alternating voltage is applied to the display material and the display device comprises: picture element electrodes disposed in a matrix form; thin film transistors having drain electrodes, source electrodes and gate electrodes thereof connected to said picture element electrodes, to picture signal wires and to scanning signal wires, respectively; first wires coupled to said picture element electrodes through storage capacitance (Cs); and counter electrodes formed in opposition to said picture element electrodes across said display material;
wherein:
said alternating voltage application is performed by changes in the potential across said display material through transmission of picture signal voltages to said picture element electrodes during the ON period of respective TFTs, through application of first modulation signals (Ve) to said first wires (X) during the OFF period of respective TFTs and through application of second modulation signals (Vt) to said counter electrodes in synchronisation with said first modulation signals (Ve).

By applying the first modulation signal to the first wiring connected to the picture element electrode through an accumulated capacitance and applying the second modulation signal to the counter electrode, and modulating the potential difference between the first wiring and the counter electrode, the capacitive coupling potential appearing at the picture element electrode through the related capacitance can be effectively utilized. As a result, at least part of the DC components induced through the capacitance between the gate and drain by the scanning signal and the dielectric anisotropy of the liquid crystal can be compensated, and the causes of flicker and image memory can be eliminated, and display of high quality is realized, while the reliability of driving of the display device may be enhanced at the same time. Still more, by supplying part of the liquid crystal driving voltage from the capacitive coupling potential, the output amplitude of the image signal driver may be decreased, and therefore the driving electric power may be saved.

While the novel features of the invention are set forth with particularity in the appended claims, the invention, both as to organization and content, will be better understood and appreciated, along with other objects and features thereof, from the following detailed description taken in conjunction with the drawings.
FIG. 1 is a diagram showing an element composition for explaining the principle of the invention;
FIG. 2 and FIG. 4 are diagrams showing voltage waveforms to be applied to the basic composition in FIG. 1;
FIG. 3 is a diagram showing the relation between the light transmission intensity of liquid crystal and applied voltage, and the effect of voltage by this invention;
FIG. 5 is a diagram showing the relation between first and second modulation signal amplitudes, and potential changes ΔV* of picture element electrode due to capacitive coupling;
FIG. 6 is a diagram showing the basic composition of first, second and sixth embodiments of the invention;
FIG. 7 is a diagram showing applied voltage waveforms of the first and second embodiments;
FIG. 8 is a diagram showing a basic composition of the device in a third embodiment of the invention;
FIG. 9 is a diagram showing applied voltage waveforms in the third embodiment;
FIG. 10 is a diagram showing a basic composition of the device in fourth and fifth embodiments of the invention; and
FIG. 11 is a diagram showing applied voltage waveforms of the fourth and fifth embodiments.

First of all, the theoretical background of the invention is described below.

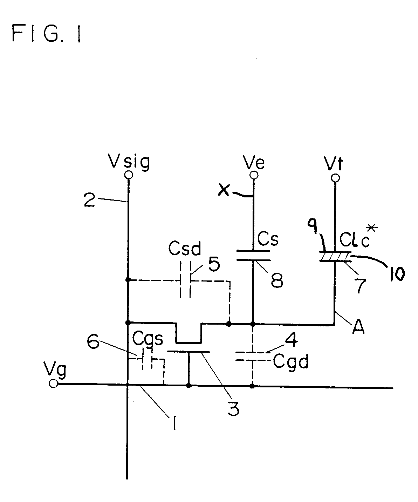

FIG. 1 shows an electric equivalent circuit of display element of TFT (Thin Film Transistor) active matrix driving LCD. Each display element possesses a TFT 3 at the intersection of a scanning signal wire 1 and a picture signal wire 2. The TFT contains, as parasitic capacitances, gate-drain capacitance Cgd 4, source-drain capacitance Csd 5, and gate-source capacitance Cgs 6. Furthermore, as intentionally formed capacitances, there are liquid crystal capacitance Clc* 7, and a storage capacitance Cs 8.

To these element electrodes, driving voltages are applied from outside, specifically, a scanning signal Vg is applied to the scanning signal wire 1, a picture signal voltage Vsig to the picture signal wire 2, a second modulation signal Vt to the counter electrode of the liquid crystal capacitance Clc*, and a first modulation signal Ve to one of the electrodes of the storage capacitance Cs. Through these parasitic and intentionally formed capacitances, the effects of the driving voltages appear on the picture element electrode (point A in FIG. 1).

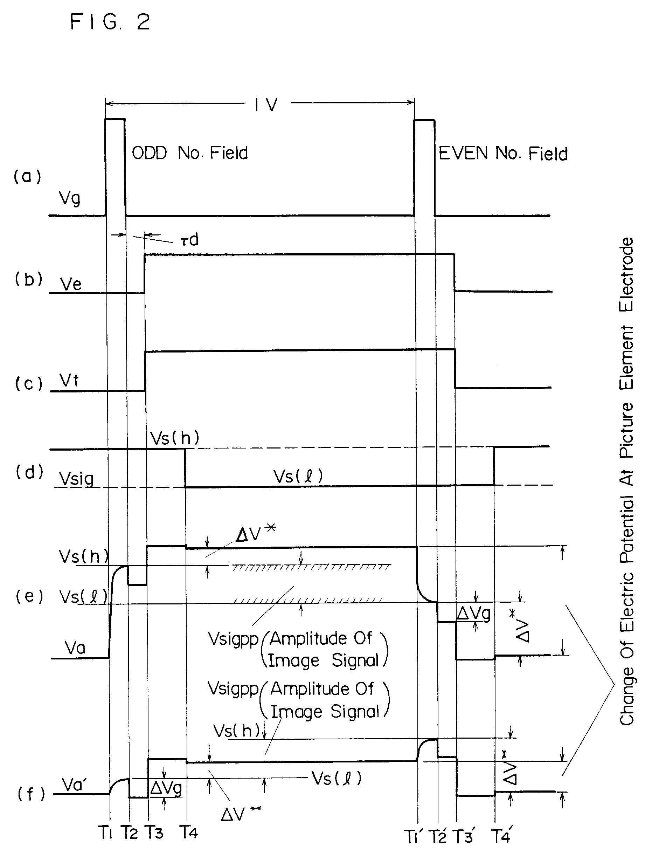

When voltages Vg, Ve, Vt and Vsig shown in FIG. 2 (a) to (d) defined as variation components of related voltages are applied to the points in FIG. 1, the potential change ΔV* of the picture element electrode due to capacitive coupling is expressed in the following formula (1) (excluding, however, the potential change components of point A due to electric conduction from the picture signal wire by turning on the TFT).

$\text{ΔV* = -(CgdVg + CsVe + CsdVsig + Clc*Vt)/Ct (1)}$
$\text{Ct = Cs + Cgd + Csd + Clc* = Cp + Clc*}$

where the first term is the potential change induced on the picture element electrode by the scanning signal Vg through the parasitic capacitance Cgd of the TFT; the second term denotes the effect of the first modulation voltage; the third term shows the potential change induced on the picture element electrode by the picture signal voltage through the parasitic capacitance; and the fourth term refers to the effect of the second modulation signal. In this fourth term, Clc* is the capacitance of the liquid crystal changing due to the effect of the dielectric anisotropy as the state of the orientation of liquid crystal varies depending on the magnitude of signal voltage (Vsig). Therefore, Clc* and ΔV* vary depending on largeness (Clc(h)) or smallness (Clc(l)) of the liquid crystal capacity. (Although Cgs is a capacitance between gate and signal electrode, it is ignored because both the scanning signal wire and picture signal wire are driven by low impedance power source and this coupling does not influence the display electrode potential directly.)

As the condition for eliminating the effects of capacitance changes due to orientation of the liquid crystal, from the two equations of (1) corresponding to large (Clc(h)) and small (Clc(l)) liquid crystal capacitances, it follows that

$\text{ΔV(l) - ΔV(h) = 0 (2)}$

and hence

$\text{CgdVg + CsVe + CsdVsig = CpVt (3)}$

is deduced.

The first point to notice is that Clc* does not appear in equation (3). That is, when driven in the condition where equation (3) is satisfied, the effect of the dielectric anisotropy of the liquid crystal is eliminated, and the DC voltage attributable to Clc* is not generated inside the display device. At the same time, in the driving condition satisfying equation (3), it may be also considered that the scanning signal Vg may cancel and nullify the DC potential induced between the picture signal wire and display electrode through the parasitic capacity Cgd. Equation (3) may be also rewritten as follows.

$\text{Ve = {CpVt - CgdVg - CsdCsig}/Cs (4)}$

Putting (4) into (l) yields

$\text{ΔV* = ΔV(l) - ΔV(h) - Vt. (5)}$

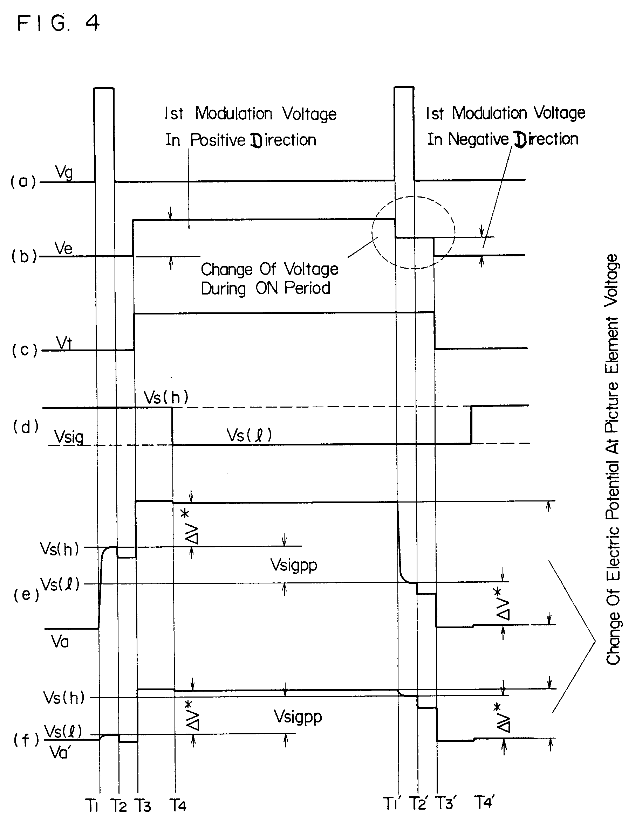

The second point to notice is the meaning of equation (5). That is, the potential ΔV* induced in the picture element electrode is always equal to the amplitude of the second modulation signal Vt. Therefore, the signal voltage applied between the picture element electrode and the counter electrode while the TFT is in conductive state is maintained without being disturbed by the modulation signal. This phenomenon is regardless of the liquid crystal capacitance. Thus, voltage of positive and negative polarities are equally applied to the liquid crystal, and the flicker decreased fundamentally (see FIG. 4).

The third point to notice is that the conditional formula (4) possesses two voltage parameters Vt and Ve that can be arbitrarily set at the display device side. Accordingly, when Ve and Vt are controlled in conformity with equation (4), the potential change ΔV* appearing on the picture element electrode can be set in a desired magnitude. On the other hand, Vg is a semifixed constant determined by the driving condition, but its effect can be corrected by Ve, Vt. Meanwhile, Vsig is the display data proper, and it varies arbitrarily between the maximum value and minimum value. Therefore, depending on the magnitude of CsdVsig, it is impossible in the actual device to establish the conditional formula (4) always accurately. However, in order to drive the display device by minimizing the dissociation from formula (4), it is enough to reduce CsdVsig. Csd is the device constant. To reduce CsdVsig, Vsig should be decreased by making full use of the effects of Vt, Ve. (It is thus important that there are two voltage parameters Ve and Vt that can be set arbitrarily).

Furthermore, to reduce Vsig, the output amplitude of the picture signal driving circuit for controlling the analog signal is decreased, and the power consumption of the circuit can be reduced in proportion to the square of the amplitude. In the case of color display, similarly, it also leads to saving of power consumption in the chroma IC handling analog signals. On the other hand, Ve, Vt are digital signals, and this IC is on/off controlled. Therefore, when the first and second modulation signals Ve, Vt are applied, the power consumption is saved in the entire driving system composed of complementary MOSIC.

Shown below are approximate values of capacitance and voltage parameters used in the devices in the embodiments explained later.

$\text{Cs = 0.68 pF, Clc(h) = 0.226 pF, Clc(l) = 0.130 pF, Cgd = 0.028 pF, Csd = 0.001 pF, Vg = 25V, Ve = 03 - +4V, Vt = ±3.5V, Vsig = ±2.OV.}$

Considering the above parameters, the third term of equation (4) may be substantially ignored, and the expression may be rewritten as

$\text{Ve = {CpVt - CgdVg}/Cs (4a)}$

Furthermore, if there is no effect of the potential change Vg of the scanning signal mentioned below, (4a) is rewritten as

$\text{Ve = CpVt/Cs (4b)}$

FIG. 2 (e), (f) show potential changes in the picture element electrode (point A in FIG. 1) when driving signals Vg, Vsig, and modulation signals Ve, Vt are fed to each electrode of the display element in FIG. 1. For example, in an odd-number field, when Vsig is at Vs(h) as indicated by solid line in diagram (d), if a scanning signal Vg is given at $\text{T = T1}$ , the TFT is made to conduct, and potential Va at point A is charged until equal to Vs(h). Next, when the scanning signal disappears at $\text{T = T2}$ 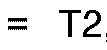 , this Vg change appears as potential fluctuation of ΔVg at point A through Cgd. Furthermore, after delay time of τd, at $\text{T = T3}$ , when Ve, Vt vary in the positive direction, their effects appear as a positive displacement of the potential Va. Afterwards, at $\text{T = T4}$ , when Vsig changes from Vs(h) to Vs(l), similarly, a potential fluctuation at point A appears. Combining with this capacitive coupling component, the sum is expressed as ΔV* in this diagram.

Later, when a scanning signal is fed in an even-number field, the TFT charges point A to the low level Vs(l) of Vsig. When the TFT is turned off, same as in the case above, the capacitive coupling potential ΔV* appears. Thus, when the TFT is turned on, if Vsig is at high level and Ve, Vt at low level, or, to the contrary, if Vsig is at low level and Ve, Vt at high level, and also if Ve, Vt vary after the TFT is turned off, the effective applied voltage Veff to the liquid crystal is, with respective to the picture signal amplitude Vsigpp, nearly Vsigpp + 2ΔV* as shown in Fig.2(e), and the both superpose on each other. In other words, the output amplitude of the picture signal output IC can be decreased by 2ΔV*. (Hereinafter it is called reverse phase when the phase relation of Ve, Vt and Vsig is as stated above).

On the other hand, when Vsig is in the relation as indicated by broken line in diagram (d) with respect to the modulation signals Ve, Vt (called in phase), the effective applied voltage at point A is nearly 2ΔV* - Vsigpp as shown in Fig. 2(f), so that ΔV* and Vsig partially cancel each other.

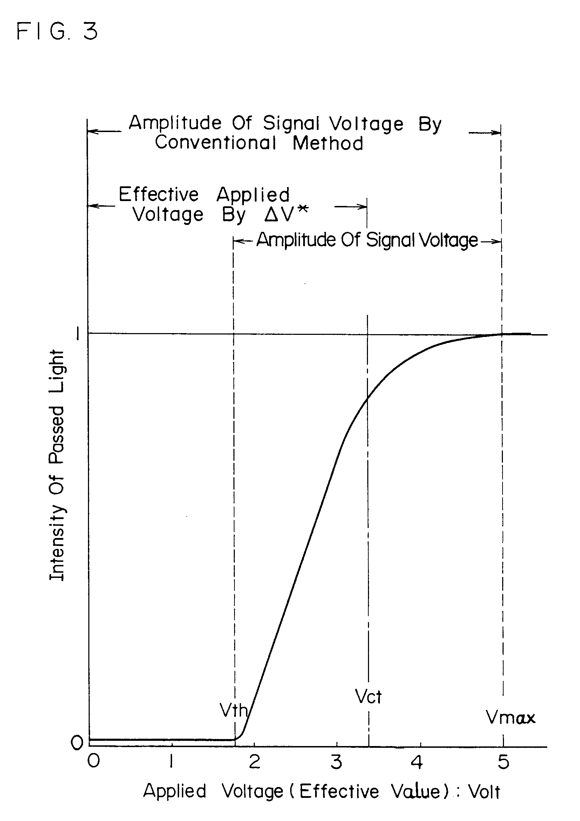

FIG. 3 shows the relation of the applied voltage of liquid crystal and transmission light intensity, and also refers to an example of voltage range for controlling the transmitted light by ΔV* and Vsig. The voltage range in which the transmitted light of liquid crystal varies is from Vth to Vmax. Setting the applied voltage by ΔV* at VCT, by controlling the amplitude of the signal voltage and the phase, the required maximum signal amplitude voltage can decrease Vsigpp to (Vmax - Vth).

FIG. 2 shows a case of matching of amplitude in the positive direction and negative direction of the first and second modulation signals. In this case, it is not possible to compensate the effect for inducing a DC potential difference between the mean potential of the picture element electrode and the mean potential of the picture signal wire through the coupling of the scanning signal voltage with parasitic capacitance. But it possesses, as stated above, the effect of decreasing the picture signal amplitude, which is one of the objects of the invention.

FIG. 4 shows a driving method in which the waveform in FIG. 2 is further improved. The fundamentally different point is the amplitude in the positive direction and negative direction of at least one modulation signal is varied. That is, as shown by circle in FIG. 4 (b), at $\text{T = T1'}$ (within the ON period of TFT or before the TFT turns off), Ve is once changed, and scanning by Vg is over (after the TFT is turned off), and at $\text{T = T3'}$ , the first modulation signal decreased in the amplitude in the negative direction is applied. (According to equation (4), it is also possible to change the amplitude of one or both of the first and second modulation signals.)

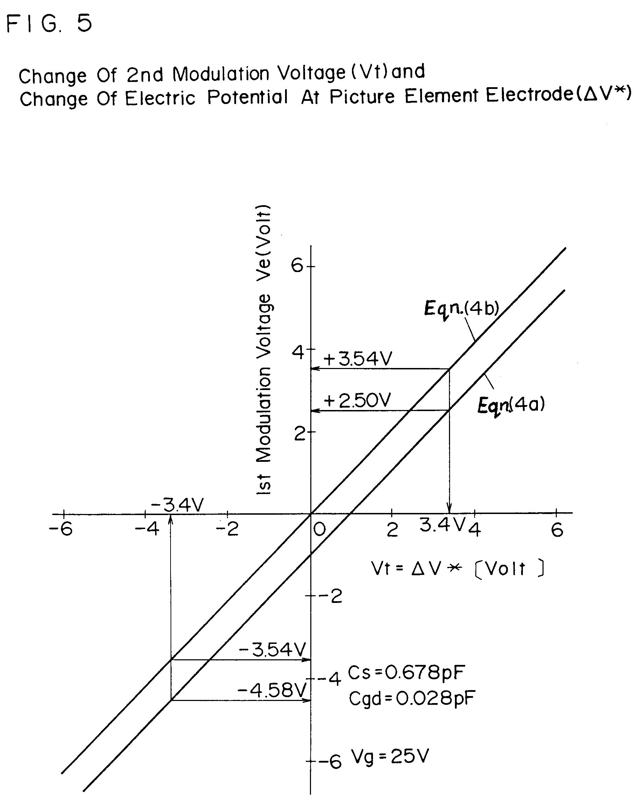

As shown in the TFT design condition of the present inventors stated above, if the potential change CsdVsig is small, the third term of equation (4) may be ignored, and equation (4a) is established. FIG. 5 shows the relation between the first modulation signal Ve and second modulation signal Vt in equations (4a), (4b). [In this condition, it must be noted that $\text{Vt = ΔV*}$ .]

Suppose, as shown in FIG. 3, 3.4V is required as the effect of modulation potential by ΔV*, then amplitude Vt of the second modulation signal should be set at 3.4V in both positive direction and negative direction (see equation (5)). Next, when setting the first modulation signal, from the straight line of equation (4a) in FIG. 5, the amplitude from the negative to positive direction of Ve at $\text{T = T3}$ should be set at 4.58V, and the amplitude from the positive to negative direction at $\text{T = T3'}$ , at 2.50V. Their potential difference of 2.08V is applied, in FIG. 4, as the potential fluctuation of Ve in the ON period of TFT.

The effect of varying the amplitude of the modulation signal in the positive direction and negative direction will be clarified by comparing the schematic diagrams (e), (f) showing the potential Va of the picture element electrode. That is, in FIG. 2, the range of the amplitude of the picture element electrode potential is asymmetrical vertically with respect to the range of the picture signal amplitude. This is because the fluctuation of Vg in the negative direction at $\text{T = T2}$ and $\text{T = T2'}$ is always dislocating the picture element electrode potential Va always in the negative direction through the parasitic capacitance Cgd. Accordingly, the potential of the picture signal wire and the picture element electrode differ by ΔVf on average, and this potential (ΔVg) is present as the DC component between the both electrodes.

In FIG. 4, on the other hand, the fluctuation range of the picture element electrode potential is symmetrical vertically with respect to the range of the picture signal amplitude This is because the potential change of picture element electrode induced by Vg through parasitic capacitance Cgd is compensated at $\text{T = T2}$ , $\text{T = T2'}$ , by varying the amplitude of the modulation signal in the positive direction at $\text{T = T3}$ and the modulation signal in the negative position at $\text{T = T3'}$ . In this way, the mean potential of the picture element electrode and the mean potential of the picture signal wire can be equalized. That is, the DC components of the both are zero, and are thus compensated. When driven in such manner, the phenomenon of image memory will be very slight as stated below.

In the case of FIG. 4, all the objects of the invention mentioned above are satisfied.

The invention is further described below while referring to its embodiments.

### (Example 1)

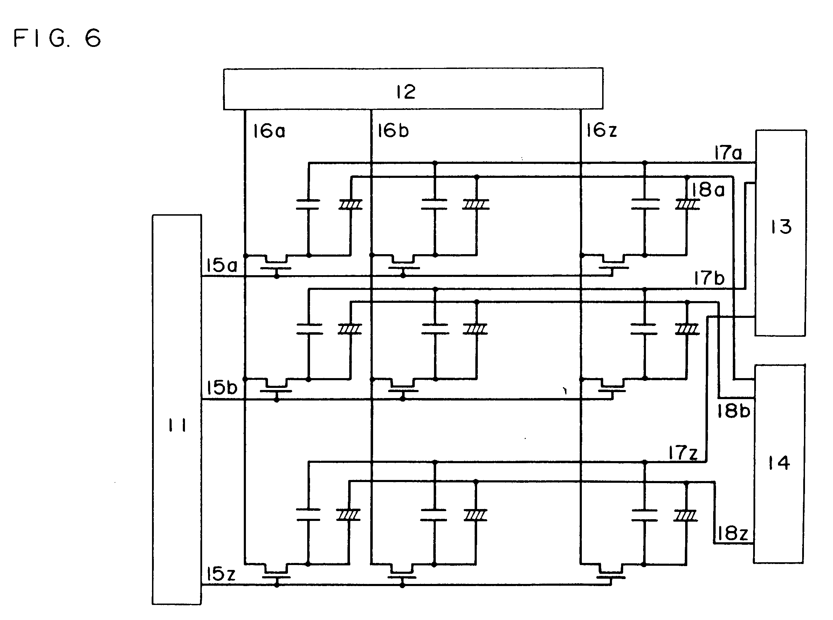

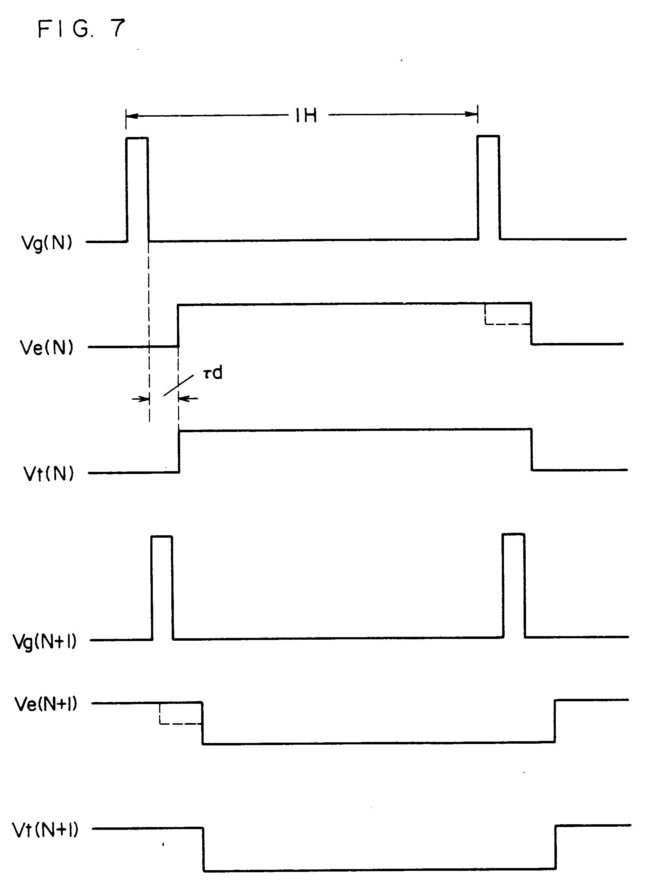

FIG. 6 shows a circuit diagram of the device of the first embodiment of the invention, in which numeral 11 is a scanning drive circuit, 12 is a video signal drive circuit, 13 is a first modulation circuit, and 14 is a second modulation circuit. Furthermore, 15a, 15b, ..., 15z are scanning signal wires, 16a, 16b, ..., 16z are image signal wires, 17a, 17b, ..., 17z are common electrodes of storage capacitance, and 18a, 18b, ..., 18z are counter electrodes of liquid crystal. In this embodiment, the storage capacitance and counter electrode are separated in each scanning signal wire as shown above, and the first and second modulation signals are applied according to each scanning signal wire. The time chart of scanning signal and modulation signal is shown in FIG. 7. This diagram shows the scanning signal and modulation signal corresponding to the N-th scanning signal wire and N+l-th scanning signal wire. The mutual relation of modulation signal and image signal, and ΔV* and Vsig is, intrinsically, same as shown in FIG. 2. That is, the polarity of image signal and modulation signal is inverted in every frame.

In this embodiment, with the output amplitude of the signal voltage of only 2 Vpp, all region from black to white could be driven, and a high contrast display was realized. The brightness of the display image was adjusted by varying the amplitude ΔV* of the modulation signal.

### (Example 2)

In Example 2, the displacement of the first modulation signals Ve(N), Ve(N+l) in the negative direction was varied in two steps as indicated by broken line in FIG. 7. That is, the Ve potential was once varied in ON period of TFT, and after the TFT was turned off, the modulation signal was added in the negative direction decreasing in the amplitude as compared with the displacement in the positive direction.

In this embodiment, in addition to the effects of Example 1, flicker decreased, and the driving reliability was increased.

### (Example 3)

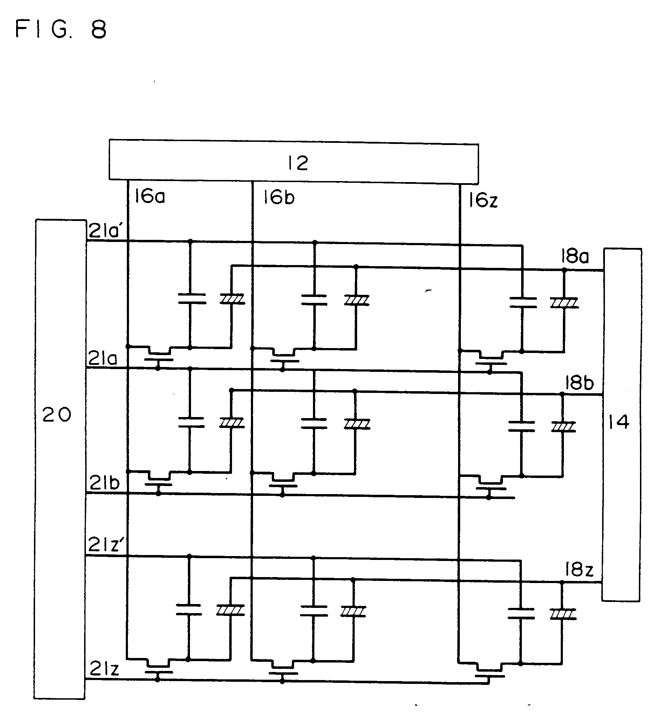

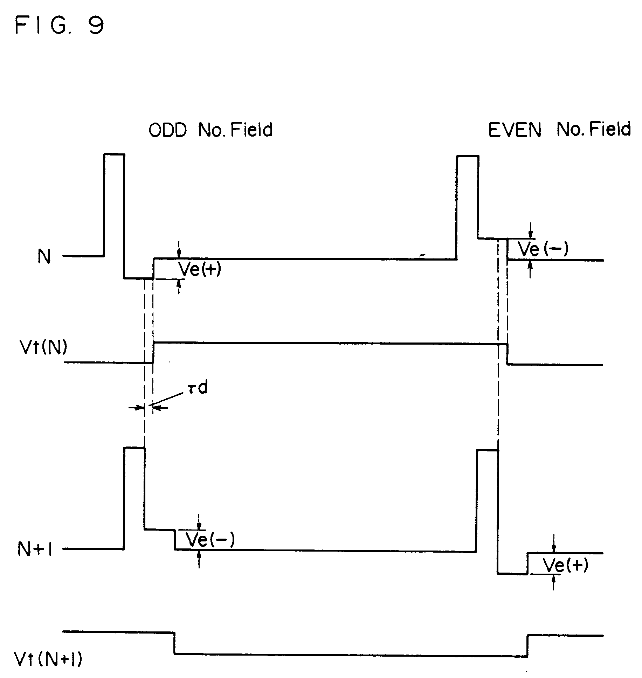

The circuit of the third embodiment is shown in FIG. 8, and the voltage waveform applied to this circuit is given in FIG. 9. In FIG. 8, 21a is a first scanning signal wire, 21a' is a common electrode wire of the storage capacitance attached to the first scanning signal wire, 21z is a final scanning signal wire, and 21z' is a common electrode wire of storage capacitance attached to the first scanning signal wire. In this embodiment, what is different from Examples 1, 2 is that the common electrode of storage capacitance Cs was formed by using the scanning signal wire of the previous stage. Therefore, the first modulation signal is applied to the scanning signal wire of the preceding stage. As shown in FIG. 9, after scanning of the N+l-th scanning signal wire is over (delay time τd), the polarity of the first modulation signal applied to the N-th scanning signal wire and the second modulation signal Vt(N) applied to the counter electrode attached to the N-th scanning signal wire is inverted.

The polarity inversion of the modulation signals may be effected either to the N-th and N+l-th scanning signal wires, or to the odd and even fields, or in duplication, or to the field alone. The potential variation of first modulation signal in the positive direction Ve(+) and the potential variation in the negative direction Ve(-) are designed to be variable independently. When the absolute values of potential variations Ve(+) and Ve(-) are equalized, the same effects as in Example 1 were obtained, and when driven according to equation (4) by relatively decreasing Ve(-) as compared with Ve(+), the same effects as in Example 2 were obtained.

The effects of this embodiments were same as those in Examples 1, 2.

### (Example 4)

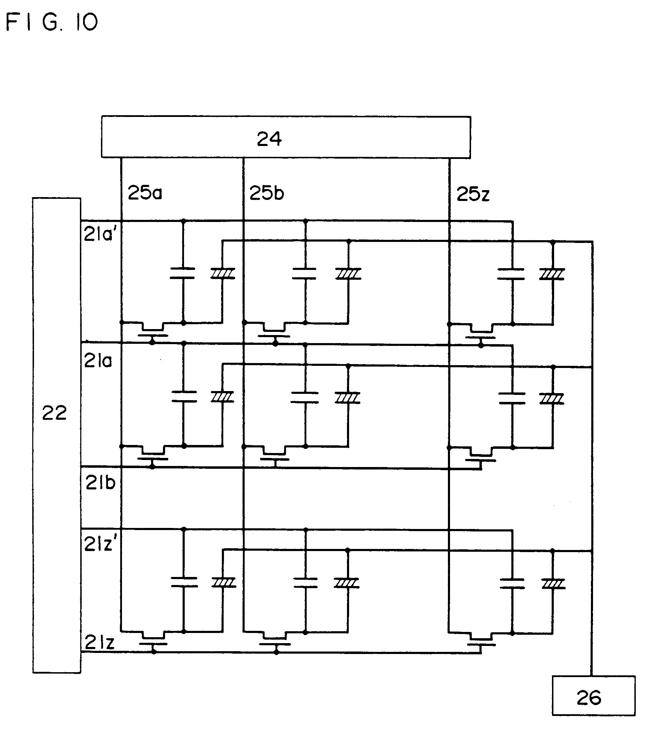

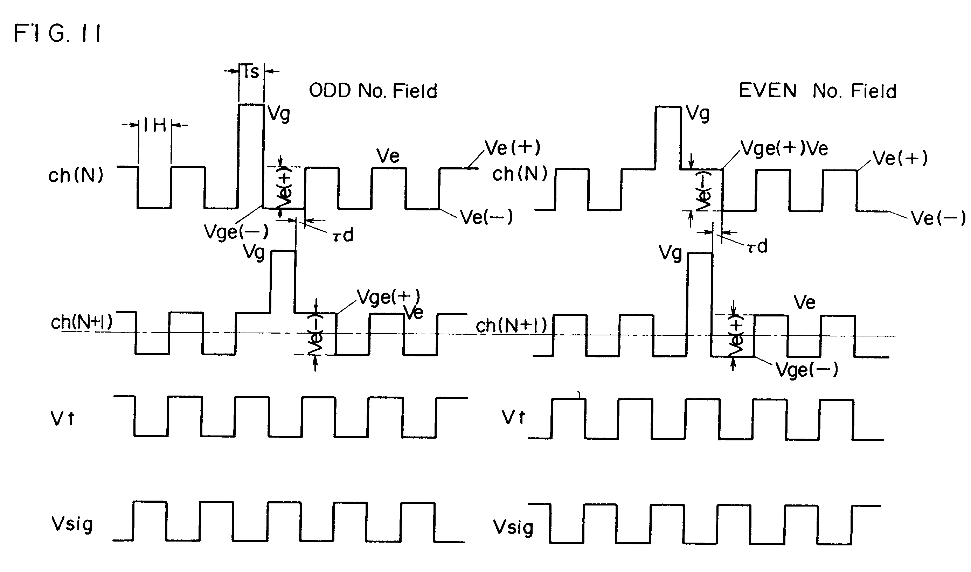

The circuit of the fourth embodiment is shown in FIG. 10, and the voltage waveform applied in this example is given in FIG. 11.

In this embodiment, it is same as in Example 3 that the first modulation signal is applied in duplication to the scanning signal wire, but the counter electrode is not divided into each corresponding scanning signal wire, and the potential is identical over the entire display device, and the electric polarity of the picture element electrode and counter electrode are varied in every scanning period (lH). In FIG. 10, 22 is a scanning drive circuit, 24 is a video signal drive circuit, and 26 is a second modulation signal generation circuit. Meanwhile, 25a, 25b, ..., 25z are picture signal wires. In FIG. 11, Ch(N), Ch(N+l) are voltage waveforms applied to the N-th and N+l-th scanning signal wires. Vt is a second modulation signal, and Vsig is a picture signal voltage waveform. This diagram also shows the difference in voltage waveform (polarity inversion) in the odd field and even field for AC driving of the liquid crystal.

The higher waveform Vg of waveforms Ch(N), Ch(N+l) is a scanning signal, and the rectangular waveform linking to its front and rear is a first modulation signal Ve. The amplitude of Ve is controlled at identical voltage and fixed amplitude in all scanning signal wires. However, only the potentials Vge(+), Vge(-) indicated by thick lines right after scanning signal were controlled independently. Therefore, as the first modulation signal right after end of scanning signal, Vge(-)-Ve(+) is defined as the potential change in the positive direction, and Vge(+)-Ve(-) as the potential change in the negative direction. The application time Ts of the scanning signal is variable controllable within less than one scanning period. After termination of scanning of the next stage {Ch(N+l)}, following the delay time τd, first and second modulation signals were applied.

In this embodiment, Ve is commonly applied to all scanning signal wires in phase. Therefore, the second term CsVe in equation (1) becomes $\text{(Cs+Cgd)Ve = CpVe}$ . Hence, equation (3) is rewritten as follows

$\text{CgdVg + CpVe + CsdVsig = CpVt}$

If CsdVsig can be ignored, the conditional formula (4) may be divided into two cases, that is,
1. Right after the termination of scanning signal Vg,

   $\text{Ve = {CpVt - CgdVg}/Cp = Vt - VgCgd/Cp . (4a')}$
2. Otherwise,

   $\text{Ve = CpVt/Cp = Vt . (4b')}$

Thus, after scanning signal, when Ve(-), Ve(+) potentials and Ve are controlled independently, both conditions (4a'), (4b') will be established.

Therefore, also in this embodiment intended to vary the polarity of the potentials of the counter electrode and picture element electrode in every scanning period, by adjusting Ve(+), Ve(-) and Ve independently, the effects of the dielectric anisotropy of the liquid crystal can be compensated, and the DC potential difference occurring between the picture signal wire and picture element electrode can be rendered to zero. (As a natural consequence, the mean potential of the picture signal given to the picture signal wire and the mean potential of the picture element electrode are equal to each other.) Thus, by eliminating the principal causes of flicker and image memory, the driving reliability is enhanced, and the driving electric power can be also decreased. In this case, the gradation controllability is also improved markedly.

### (Example 5)

In Example 4, the potentials Vge(-), Vge(+) right after scanning signal were made equal to potential Ve(-), Ve(+), respectively. In this case, driving is not matched with the conditional formula (b) in one scanning period right after scanning signal, but in the other display periods, the driving conforms to the fundamental conditional formula (4b). For example, in the case of 240 scanning lines, the period conforming to (4b) is 238/240, which may practically be regarded as the whole period. As a result, as the display device, the number of power outputs could be reduced by two as compared with Example 4, and the construction of the scanning drive circuit can be simplified.

Thus is obtained the display device that is lower in power consumption and lower in price, but is almost the same in performance as compared with Example 4.

### (Example 6)

In Example 4, the potential of the second modulation signal generator 26 in FIG. 10 was made floating. That is, the counter electrode was not connected to any terminal, and the circuit was driven in the floating potential state. In this case, the first modulation signal Ve applied to all scanning signal wires appears at the counter electrode through the electrostatic capacitance in the display device. Inside the display device, there is a picture signal wire held at a potential indifferent to Ve, and the second modulation signal appearing at the counter electrode is generally small in amplitude than Ve, and the condition formula (4b') is not satisfied perfectly. However, the source for generation of second modulation signal can be omitted, and the power saving effect is great. It is also possible to display excellent pictures, and the objects of the invention are satisfied almost completely.

### (Example 7)

In Example 4, the second modulation signal generator 26 was composed of a capacitor. One of the electrodes of the capacitor was connected to the counter electrode, and the other electrode was connected to the first modulation signal generator. In this case, as the capacitance of the capacitor, it is enough when it is sufficiently larger than the capacitance between the counter electrodes of the display device and all picture signal wires, and it may not be so large as the capacitance between the counter electrodes and all electrodes on the other board. This construction enables to drive while satisfying the conditional formula (4b') of $\text{Ve=Vt}$ . Furthermore, the second modulation signal generator is not particularly needed, and the power saving effect is great.

### (Example 8)

In Example 7, one of the electrodes of the resistance is connected parallel to the capacitor furthermore to the counter electrode connected to one of the electrodes of the capacitor, and the other electrode of the resistance was connected to an electrode held at a specific potential. The resistance value R of this resistance may be enough if the time constant CR is sufficiently larger than the period (l/H) of the modulation signal.

### (Example 9)

In Examples 1, 2, the common wires 17a, 17b, ..., 17z of storage capacitance were commonly connected, and furthermore the common wires 18a, 18b, ..., 18z of the counter electrode were commonly connected, and in this constitution the driving similar to Example 4 was effected by changing the polarity of display electrodes in every one scanning period. In this case, although it is impossible to render the internal DC potential difference to zero, a favourable picture display is realized.

As clear from the description herein, this invention possesses, among others, the following notable effects.

Firstly, the output signal voltage of the signal drive circuit of the active matrix display device can be greatly decreased, and the power consumption of the same drive circuit handling analog signals is saved. Furthermore, when this invention is used in color display, the output amplitude of the chroma IC is also decreased, and the power of the circuit is also saved. Thus, the driving electric power of the entire display device can be decreased. On the other hand, decrease of the amplitude of the output signal voltage brings about secondary effects, such as ease of fabrication of circuit, use of region of good linearity of signal amplifier, and improvement of display quality, among the recent tendencies of higher display density and higher frequency of signal driving circuit.

Secondly, the display picture quality is improved. Even in the AC driving of every field as shown in Examples 2, 3, the cause of flicker could be removed. In Example 4, in addition to the above, uniform brightness of display, and notable enhancement of gradation display performance were observed.

Thirdly, the reliability of display device is enhanced. This is because of removal of the DC voltage conventionally occurring inevitably in the display device due to anisotropy of liquid crystal and capacitive coupling of scanning signal through Cgd. These DC voltage components were causes to induce various display defects. By removal of such DC voltage, the printing phenomenon of image occurring right after display of fixed image was greatly improved. Furthermore, the driving condition conforming to formula (4) is not affected by the dielectric anisotropy of the liquid crystal. It means that, when the display device is used in a wide temperature range, if the dielectric constant itself varies, its effects do not appear so that stable driving is guaranteed.

In the foregoing description, this invention was applied in liquid crystal display device, but it may be also applied in driving of other flat plate display device.

According to this invention, reduction of power consumption of display device, improvement of picture quality, and enhancement of reliability may be achieved simultaneously, and its industrial effects are great.

## Claims

1. A method of driving a display device in which an alternating voltage is applied to the display material and the display device comprises: picture element electrodes (7) disposed in a matrix form; thin film transistors (3) having drain electrodes, source electrodes and gate electrodes thereof connected to said picture element electrodes (7), to picture signal wires (2) and to scanning signal wires (1), respectively; first wires (X) coupled to said picture element electrodes (7) through storage capacitance (Cs); and counter electrodes (9) formed in opposition to said picture element electrodes (7) across said display material (10);
wherein:
said alternating voltage application is performed by changes in the potential across said display material (10) through transmission of picture signal voltages to said picture element electrodes (7) during the ON period of respective TFTs (3), through application of first modulation signals (Ve) to said first wires (X) during the OFF period of respective TFTs (3) and through application of second modulation signals (Vt) to said counter electrodes (9) in synchronisation with said first modulation signals (Ve).

2. A method of driving a display device according to claim 1, wherein third modulation signals are applied to said scanning signal wires (1) in synchronisation with said first modulation signals (Ve).

3. A method of driving a display device according to claim 1 or 2, wherein said first modulation signals (Ve) and said second modulation signals (Vt) have the same polarity.

4. A method of driving a display device according to claim 1 or 2, wherein, during a period of time after the end of the ON period of respective TFTs (3), first modulation signals (Ve) having amplitudes different between the positive and negative directions, and alternating in polarity from field to field, are applied to said first wires (X).

5. A method of driving a display device according to claim 1, wherein said first wires (X) are neighbouring scanning signal wires (1).

6. A method of driving a display device according to claim 1 or 2, wherein before the end of the ON period of respective TFTs (3) a part of the potential of the first modulation signal (Ve) is changed.

7. A method of driving a display device according to claim 1 or 2, wherein the first modulation signals (Ve) and the second modulation signals (Vt) have the same amplitude.

8. A method of driving a display device according to claim 1, 2 or 5, wherein said counter electrodes (9) are held at a uniform potential over the entire display surface area, first modulation signals (Ve) with polarity thereof alternated for every scanning period are applied to said first wires (X) and at the same time the second modulation signals (Vt) are applied to said counter electrodes (9) in synchronisation with said first modulation signals (Ve).

9. A method of driving a display device according to claim 7, wherein, for a period of time after the application of respective scanning signals, the amplitude of the first modulation signals (Ve) is larger in the positive direction and smaller in the negative direction.

10. A method of driving a display device according to claim 1 or 2, wherein the counter electrodes (9) are held at a floating electrical potential and the second modulation signals (Vt) are supplied from the first modulation signals (Ve) through a capacitive coupling existing in the display device.

11. A method of driving a display device according to claim 10, wherein the counter electrodes (9) are held at a particular potential and the second modulation signals (Vt) are supplied from the first modulation signals (Ve) through a capacitive coupling.

## Patentansprüche

1. Verfahren zum Ansteuern eines Anzeigegerätes, bei dem eine Wechselspannung an das Anzeigematerial angelegt wird und das Anzeigegerät umfaßt: Bildelement-Elektroden (7), die in in Matrixform angeordnet sind; Dünnfilmtransistoren (3), deren Drain-Elektroden, Source-Elektroden und Gate-Elektroden jeweils mit den Bildelement-Elektroden (7), mit Bildsignaldrähten (2) bzw. mit Abtastsignaldrähten (1) verbunden sind; erste Drähte (X), die mit den Bildelement-Elektroden (7) über Speicherkapazität (Cs) gekoppelt sind und Gegenelektroden (9), die den Bildelement-Elektroden (7) durch das Anzeigematerial (10) gegenüberliegend ausgebildet sind;
wobei:
das Anlegen der Wechselspannung ausgeführt wird durch Verändern des an dem Anzeigematerial (10) anliegenden Potentials unter Durchleiten von Bildsignal-Spannungen zu den Bildelement-Elektroden (7) während der EIN-Periode der entsprechenden TFTs (3), durch Anlegen von ersten Modulationssignalen (Ve) an die ersten Drähte (X) während der AUS-Periode der jeweiligen TFTs (3) und durch Anlegen von zweiten Modulationssignalen (Vt) an die Gegenelektroden (9) synchron zu den ersten Modulationssignalen (Ve).

2. Verfahren zum Ansteuern eines Anzeigegerätes nach Anspruch 1, bei dem dritte Modulationssignale synchron zu den ersten Modulationssignalen (Ve) an die Abtastsignaldrähte (1) angelegt werden.

3. Verfahren zum Ansteuern eines Anzeigegerätes nach Anspruch 1 oder 2, bei dem die ersten Modulationssignale (Ve) und die zweiten Modulationssignale (Vt) die gleiche Polarität besitzen.

4. Verfahren zum Ansteuern eines Anzeigegerätes nach Anspruch 1 oder 2, bei dem während einer Zeitperiode nach dem Ende der EIN-Periode der jeweiligen TFTs (3) erste Modulationssignale mit zwischen den positiven und negativen Richtungen unterschiedlichen Amplituden und von Feld zu Feld wechselnder Polarität an die ersten Drähte (X) angelegt werden.

5. Verfahren zum Ansteuern eines Anzeigegerätes nach Anspruch 1, bei dem die ersten Drähte (X) einander benachbarte Abtastsignaldrähte sind.

6. Verfahren zum Ansteuern eines Anzeigegerätes nach Anspruch 1 oder 2, bei dem vor dem Ende der EIN-Periode der jeweiligen TFTs (3) ein Teil des Potentials des ersten Modulationssignals (Ve) geändert wird.

7. Verfahren zum Ansteuern eines Anzeigegerätes nach Anspruch 1 oder 2, bei dem die ersten Modulationssignale (Ve) und die zweiten Modulationssignale (Vt) die gleiche Amplitude besitzen.

8. Verfahren zum Ansteuern eines Anzeigegerätes nach Anspruch 1, 2 oder 5, bei dem die Gegenelektroden (9) über die gesamte Anzeigefläche auf gleichmäßigem Potential gehalten werden, erste Modulationssignale (Ve), deren Polarität bei jeder Abtastperiode geändert wird, an die ersten Drähte (X) angelegt werden, und gleichzeitig die zweiten Modulationssignale (Vt) synchron mit den ersten Modulationssignalen (Ve) an die Gegenelektroden (9) angelegt werden.

9. Verfahren zum Ansteuern eines Anzeigegerätes nach Anspruch 7, bei dem während einer Zeitperiode nach dem Anlegen der jeweiligen Abtastsignale die Amplituden der ersten Modulationssignale (Ve) in der positiven Richtung größer und in der negativen Richtung kleiner sind.

10. Verfahren zum Ansteuern eines Anzeigegerätes nach Anspruch 1 oder 2, bei dem die Gegenelektroden (9) auf einem schwimmenden elektrischen Potential gehalten werden und die zweiten Modulationssignale (Vt) von den ersten Modulationssignalen (Ve) durch eine in dem Anzeigegerät bestehende kapazitive Kopplung zugeführt werden.

11. Verfahren zum Ansteuern eines Anzeigegerätes nach Anspruch 10, bei dem die Gegenelektroden (9) auf einem bestimmten Potential gehalten werden und die zweiten Modulationssignale (Vt) durch eine kapazitive Kopplung von den ersten Modulationssignalen (Ve) zugeführt werden.

## Revendications

1. Procédé de pilotage d'un dispositif d'affichage dans lequel une tension alternative est appliquée au matériau d'affichage et le dispositif d'affichage comprend : des électrodes d'élément d'image (7) disposées sous forme matricielle ; des transistors à film mince (3) comportant des électrodes de drain, des électrodes de source et des électrodes de grille connectées respectivement auxdites électrodes d'élément d'image (7), à des lignes de signal d'image (2) et à des lignes de signal de balayage (1) ; des premières lignes (X) couplées auxdites électrodes d'élément d'image (7) par l'intermédiaire d'une capacité de stockage (Cs) ; et des contre-électrodes (9) formées à l'opposé desdites électrodes d'élément d'image (7) au travers dudit matériau d'affichage (10),
dans lequel :
ladite application de tension alternative est réalisée au moyen de variations du potentiel au travers dudit matériau d'affichage (10) par l'intermédiaire de la transmission de tensions de signal d'image auxdites électrodes d'élément d'image (7) pendant la période passante de transistors à film mince respectifs (3), par l'intermédiaire de l'application de premiers signaux de modulation (Ve) auxdites premières lignes (X) pendant la période coupée des transistors à film mince respectifs (3) et par l'intermédiaire de l'application de seconds signaux de modulation (Vt) auxdites contre-électrodes (9) en synchronisation avec lesdits premiers signaux de modulation (Ve).

2. Procédé de pilotage d'un dispositif d'affichage selon la revendication 1, dans lequel les troisièmes signaux de modulation sont appliqués auxdites lignes de signal de balayage (1) en synchronisation avec lesdits premiers signaux de modulation (Ve).

3. Procédé de pilotage d'un dispositif d'affichage selon la revendication 1 ou 2, dans lequel lesdits premiers signaux de modulation (Ve) et lesdits seconds signaux de modulation (Vt) présentent la même polarité.

4. Procédé de pilotage d'un dispositif d'affichage selon la revendication 1 ou 2, dans lequel, pendant une période temporelle après la fin de la période passante des transistors à film mince respectifs (3), des premiers signaux de modulation (Ve) présentant des amplitudes différentes entre les sens positif et négatif et présentant des polarités alternées d'une trame à une autre sont appliqués auxdites premières lignes (X).

5. Procédé de pilotage d'un dispositif d'affichage selon la revendication 1, dans lequel lesdites premières lignes (X) sont des lignes de signal de balayage voisines (1).

6. Procédé de pilotage d'un dispositif d'affichage selon la revendication 1 ou 2, dans lequel, avant la fin de la période passante des transistors à film mince respectifs (3), une partie du potentiel du premier signal de modulation (Ve) est modifiée.

7. Procédé de pilotage d'un dispositif d'affichage selon la revendication 1 ou 2, dans lequel les premiers signaux de modulation (Ve) et les seconds signaux de modulation (Vt) présentent la même amplitude.

8. Procédé de pilotage d'un dispositif d'affichage selon la revendication 1, 2 ou 5, dans lequel lesdites contreélectrodes (9) sont maintenues à un potentiel uniforme sur la totalité de l'aire de surface d'affichage, des premiers signaux de modulation (Ve) dont la polarité varie en alternance pour chaque période de balayage sont appliqués auxdites premières lignes (X) et dans le même temps, les seconds signaux de modulation (Vt) sont appliqués auxdites contre-électrodes (9) en synchronisation avec lesdits premiers signaux de modulation (Ve).

9. Procédé de pilotage d'un dispositif d'affichage selon la revendication 7, dans lequel, pendant une période temporelle après l'application de signaux de balayage respectifs, l'amplitude des premiers signaux de modulation (Ve) est supérieure suivant le sens positif et inférieure suivant le sens négatif.

10. Procédé de potage d'un dispositif d'affichage selon la revendication 1 ou 2, dans lequel les contre-électrodes (9) sont maintenues à un potentiel électrique flottant et les seconds signaux de modulation (Vt) sont appliqués à partir des premiers signaux de modulation (Ve) par l'intermédiaire d'un couplage capacitif existant dans le dispositif d'affichage.

11. Procédé de pilotage d'un dispositif d'affichage selon la revendication 10, dans lequel les contre-électrodes (9) sont maintenues à un potentiel particulier et les seconds signaux de modulation (Vt) sont appliqués à partir des premiers signaux de modulation (Ve) par l'intermédiaire d'un couplage capacitif.
